# EUROPÄISCHE PATENTSCHRIFT

(11) **EP 1 197 369 B1**
(45) Veröffentlichungstag und Bekanntmachung des Hinweises auf die Patenterteilung: **28.04.2004**
(21) Anmeldenummer: 01120162.1
(22) Anmeldetag: 22.08.2001
(51) Int. Cl.: B60J 7/22

(54) **Windschott für ein Cabriolet-Fahrzeug**
Wind deflector for a convertible vehicle
Déflecteur d'air pour véhicule convertible

(30) Priorität: 10.10.2000 DE 10050284
(43) Veröffentlichungstag der Anmeldung: 17.04.2002
(73) Patentinhaber: CTS Fahrzeug-Dachsysteme GmbH, 21079 Hamburg (DE)
(72) Erfinder: Brettmann, Jörg, 27367 Sottrum (DE)
(74) Vertreter: Müller, Gottfried

(56) Entgegenhaltungen:
- EP-A- 0 965 470
- DE-A- 4 018 862
- DE-C- 19 725 217
- GB-A- 2 225 992
- US-A- 5 443 296

## Beschreibung

Die Erfindung bezieht sich auf ein Windschott für ein Cabriolet-Fahrzeug nach dem in DE 19 826 672 A offenbarten Oberbegriff des Anspruches 1.

Windschotte werden in Cabriolet-Fahrzeugen hinter den Fahrzeugsitzen bei geöffnetem Fahrzeugdach in eine die Karosserielinie überragende Position aufgestellt, um zu vermeiden, dass die Fahrzeuginsassen von turbulenten Luftbewegungen getroffen werden. Beim Öffnen und Ablegen des Daches in eine rückwärtige Ablageposition wird das Windschott aus einer abgesenkten Position hinter den Fahrersitzen in die herausragende Position hoch gefahren. In geschlossener Fahrzeugdachposition muss das Windschott unterhalb der Fahrzeug-Karosserielinie abgelegt sein, um Kollisionen mit dem Fahrzeugdach zu vermeiden.

In der Druckschrift DE 198 41 788 A1 ist ein Windschott beschrieben worden, das in vertikalen Führungsschienen, die auf der Rückseite der Rückenlehnen der Fahrzeugsitze vorgesehen sind, vertikal auf- und abgleiten kann und manuell zwischen einer abgesenkten und einer aufgestellten Position verstellt werden kann. Um ein unbeabsichtigtes Abrutschen aus der aufgestellten in die abgesenkte Position zu vermeiden, kann das Windschott in aufgestellter Lage mit Hilfe eines Rastmechanismus fixiert werden.

Dieses Windschott weist den Nachteil auf, dass die Verstellung zwischen abgesenkter und aufgestellter Position von Hand durchzuführen ist, ebenso das Lösen des Windschotts aus der oberen Raststellung in die abgesenkte Position hinter den Fahrersitzen. Der Fahrer muss sowohl zum Aufstellen als auch zum Absenken des Windschotts das Fahrzeug verlassen. Ein derartiges Windschott ist mühsam und umständlich Hand zu haben.

Auch die Druckschrift DE 198 26 672 A1 zeigt ein Windschott für ein Cabriolet-Fahrzeug, das auf vertikalen Schienen hinter den Fahrzeugsitzen zwischen einer abgesenkten Ruheposition und einer aufgestellten Arbeitsposition zu verstellen ist. Die Verstellung des Windschotts ist an einen Überrollbügel gekoppelt, welcher zwischen einer abgesenkten Position und einer aufgestellten Arbeitsposition zu verstellen ist. Im normalen Fahrbetrieb wird der Überrollbügel in eine Zwischenposition zwischen abgesenkter und maximal ausgefahrener Position verstellt, wobei die Zwischenposition der Windschutzposition des Windschotts entspricht, in die das Windschott auf Grund der Kopplung mit dem Überrollbügel automatisch verfahren wird. Windschott und Überrollbügel hängen fest zusammen und werden gemeinsam zwischen abgesenkter und aufgestellter Position verstellt. Für die Verstellbewegung ist ein eigenständiger Antrieb vorgesehen, welcher unabhängig vom Dachantrieb ausgeführt ist. Dies macht es erforderlich, die Antriebe für das Dach und für den Überrollbügel separat zu betätigen bzw. auf Signalebene zu koordinieren.

Gemäß einem weiteren, in der DE 198 26 672 A1 beschriebenen Ausführungsbeispiel kann im Falle eines Fahrzeugüberschlages und einem hierbei erfolgenden vollständigen Ausfahren des Überrollbügels die Windschottbewegung von der Ausfahrbewegung des Überrollbügels entkoppelt werden, indem das Windschott seine vor dem Fahrzeugüberschlag eingenommene Position beibehält und lediglich der Überrollbügel vollständig ausgefahren wird. Eine koordinierte Bewegung des Windschotts mit dem Fahrzeugdach unter regulären Bedingungen beim Schließen und Öffnen des Daches ist aber in der DE 198 26 672 A1 nicht offenbart.

Die Druckschrift DE 43 32 938 C1 offenbart ein Cabriolet-Fahrzeug mit einem verstellbaren Fahrzeugdach und einem in Offenstellung des Daches um eine fahrzeugfeste Drehachse aufschwenkbaren Windschott, das mit dem Dach gekoppelt ist, so dass die Öffnungsbewegung des Daches auch ein Aufstellen des Windschotts bewirkt. Das Windschott und das Fahrzeugdach sind kinematisch gekoppelt, so dass jeder Bewegung des Fahrzeugdaches bei der Überführung zwischen Schließ- und Offenstellung auch eine Bewegung des Windschotts zugeordnet werden kann. Da das Windschott und das Fahrzeugdach zeitgleich verstellt werden, muss ein ausreichend großer Bewegungsraum für das Windschott berücksichtigt werden, der von dem Dach bei dessen Überführung zwischen Schließ- und Ablagestellung nicht beeinträchtigt werden darf. Dies hat eine erhebliche Einschränkung bei der Auslegung des Fahrzeugdaches zur Folge.

Der Erfindung liegt das Problem zugrunde, ein Windschott für ein Cabriolet-Fahrzeug anzugeben, welches einfach und bequem zu betätigen ist. Das Windschott soll insbesondere raumsparend angeordnet sein. In aufgestellter Position soll es zweckmäßig mit ausreichender Sicherheit zu fixieren sein.

Dieses Problem wird erfindungsgemäß mit den Merkmalen des Anspruches 1 gelöst. Die Unteransprüche geben zweckmäßige Weiterbildungen an.

Das erfindungsgemäße Windschott ist auf vorteilhaft hinter den Fahrersitzen angeordneten Führungsschienen vertikal zwischen einer abgesenkten und einer aufgestellten Position verschiebbar, wobei die Verschiebebewegung mittels einer Windschott-Verstelleinrichtung selbsttätig und automatisch durchzuführen ist, die vom Dachantrieb betätigt wird, über den das Fahrzeugdach zwischen seiner Schließ- und Ablagestellung verstellt wird. Auf Grund der Kopplung von Dachantrieb und Windschott-Verstelleinrichtung reicht eine einzige Antriebsart aus, um sowohl das Fahrzeugdach als auch das Windschott zu verstellen. Maßgebend ist die Bewegung des Dachantriebes, aus der über die Windschott-Verstelleinrichtung die Bewegung des Windschottes abgeleitet wird. Dachantrieb und Windschott-Verstelleinrichtung sind zweckmäßig mechanisch gekoppelt, wobei jeder Position des Fahrzeugdaches genau eine Position des Windschotts zugeordnet werden kann.

Weiterhin ist vorgesehen, dass die Windschott-Verstelleinrichtung auch vom Dachantrieb entkoppelt werden kann, wodurch die Möglichkeit eröffnet wird, die Bewegung des Fahrzeugdaches und die Bewegung des Windschotts in einen nichtlinearen Zusammenhang zu setzen. Dadurch wird beispielsweise die Möglichkeit eröffnet, bei einer kontinuierlich ausgeführten Verstellbewegung des Fahrzeugdaches zwischen Schließ- und Ablagestellung das Windschott nur in bestimmten Bewegungsphasen des Fahrzeugdaches aufzustellen bzw. abzusenken und/oder die Windschottbewegung gegenüber der Dachbewegung beschleunigt oder verzögert auszuführen.

Auf Grund des nichtlinearen Zusammenhangs ist es auch möglich, die Windschottbewegung insbesondere nur in bestimmten Phasen während der Dachbewegung bzw., gemäß einer bevorzugten Ausführung, im Anschluss an die Überführungsbewegung des Fahrzeugdaches von Schließ- in Ablageposition durchzuführen. Hierzu wird die Windschott-Verstelleinrichtung phasenweise vom Dachantrieb entkoppelt. Zweckmäßig wird, beginnend bei der Schließstellung des Fahrzeugdaches, in der das Windschott sich in abgesenkter Position befindet, die Windschott-Verstelleinrichtung zunächst vom Dachantrieb entkoppelt, so dass in der ersten Phase der Öffnungsbewegung ausschließlich das Fahrzeugdach betätigt wird und das Windschott in der abgesenkten Position hinter den Fahrersitzen verharrt. Nachdem das Fahrzeugdach in seine Ablagestellung versenkt worden ist, wird die Windschott-Verstelleinrichtung an den Dachantrieb angekoppelt und von der abgesenkten Position in die aufgestellte Position verschoben. Während der Windschottbewegung kann das Fahrzeugdach vom Dachantrieb entkoppelt werden. In dieser Ausführung übernimmt der Dachantrieb zusätzlich zur Betätigung des Fahrzeugdaches auch die Betätigung des Windschotts.

Bei der Verstellbewegung in Gegenrichtung - Überführung des Fahrzeugdaches von Ablagestellung in Schließstellung - läuft der Vorgang in umgekehrter Richtung ab. Zunächst wird das Windschott aus der aufgestellten Position in die abgesenkte Position verstellt, anschließend wird das Fahrzeugdach aus seiner Ablageposition herausgehoben und in die den Fahrzeuginnenraum überdeckende Schließposition verbracht. Auch in dieser Bewegungsrichtung ist vorteilhaft während der Windschottbewegung das Windschott an den Dachantrieb angekoppelt, wohingegen während der Dachbewegung das Fahrzeugdach an den Dachantrieb angekoppelt und das Windschott vom Dachantrieb abgekoppelt ist.

Die phasenversetzte Betätigung von Windschott und Fahrzeugdach bietet den Vorteil, dass Kollisionen von Windschott und Fahrzeugdach vermieden werden. Die Bewegungsbahn des Fahrzeugdaches kann kollisionsfrei mit der Bewegungsbahn des Windschotts geschnitten werden. Dementsprechend kann ein kompaktes Baumaß und insbesondere ein niedriges und flach abfallendes Fahrzeugdach realisiert werden.

Die Ankopplung und Entkopplung zwischen Dachantrieb und Windschott-Verstelleinrichtung wird vorteilhaft über eine hydraulische Betätigungseinrichtung realisiert, welche insbesondere als Hydraulikzylinder ausgebildet ist und in verschiedenen Phasen der Öffnungs- bzw. Schließbewegung des Daches entweder das Fahrzeugdach oder das Windschott verstellt. Der gesamte Zylinderhub des Hydraulikzylinders wird in zwei Teilhubbewegungen unterteilt, wobei im Bereich eines ersten Teilhubes ausschließlich das Fahrzeugdach und im Bereich eines zweiten, zweckmäßig geringeren Teilhubes ausschließlich das Windschott vom Hydraulikzylinder betätigt wird. Dadurch ist es möglich, die Bewegungen von Fahrzeugdach und Windschott von einer gemeinsamen Antriebseinheit ausführen und zeitlich aufeinander folgen zu lassen.

Die Ankopplung und Entkopplung zwischen Windschott-Verstelleinrichtung und Dachantrieb, insbesondere zwischen der der Windschottbewegung zugeordneten Teilhubbewegung des Hydraulikzylinders, erfolgt vorteilhaft durch eine ein- und auskoppelbare Einrichtung im Übertragungsweg zwischen der Antriebseinheit - dem Hydraulikzylinder - und der Kinematik des Windschotts, wobei Mitnehmerhebel, Freilauf-Übertragungselemente, Kupplungsglieder oder ähnliches zum Einsatz kommen können.

Zur Anbindung der Windschott-Verstelleinrichtung an den Dachantrieb ist zweckmäßig ein Antriebslenker vorgesehen, über den das Windschott zwischen der abgesenkten und der aufgestellten Position zu verstellen ist. Der Antriebslenker ist vorteilhaft an der Fahrzeugkarosserie schwenkbar gelagert und wird zur Betätigung des Windschotts vom Dachantrieb um seine Schwenkachse beaufschlagt. Um die Schwenkbewegung des Antriebslenkers in eine vertikale Hubbewegung des Windschotts umsetzen zu können, ist am Windschott bevorzugt eine Gleitschiene vorgesehen, in der der Antriebslenker gleitend geführt ist. Wird der Antriebslenker vom Dachantrieb um seine Schwenkachse verdreht, führt das am Windschott geführte Ende des Antriebslenkers eine teilkreisförmige Bewegung mit einer vertikalen Bewegungskomponente aus, wobei die horizontale Bewegungskomponente des Antriebslenkers durch die Gleitbewegung in der vorteilhaft horizontalen Gleitschiene am Windschott kompensiert wird.

Ein Ausführungsbeispiel der Erfindung wird nachstehend an Hand der Zeichnungen näher beschrieben. Es zeigen:
- Fig. 1: eine perspektivische Ansicht auf ein Windschott in einem Cabriolet-Fahrzeug, dargestellt in einer Perspektive von schräg vorn, mit dem Windschott in abgesenkter Position,
- Fig. 2: eine Fig. 1 entsprechende Perspektive, jedoch mit dem Windschott in aufgestellter Position,
- Fig. 3: eine Ansicht von schräg hinten auf das Windschott in aufgestellter Position,
- Fig. 4: eine Ansicht von schräg hinten auf das Windschott in abgesenkter Position,
- Fig. 5: eine vergrößerte Darstellung der Windschott-Verstelleinrichtung in einer Perspektive von schräg vorn,
- Fig. 6: das Windschott in abgesenkter Position mit einer Darstellung der Windschott-Verstelleinrichtung und der Dachkinematik in Schließposition des Fahrzeugdaches, wobei die Kinematik teilweise von einem karosseriefesten Hauptlager verdeckt ist,
- Fig. 7: eine Fig. 6 entsprechende Darstellung, jedoch ohne Hauptlager,
- Fig. 8: das Windschott in abgesenkter Position und die Dachkinematik in Ablagestellung,
- Fig. 9: das Windschott in aufgestellter Position und die Dachkinematik in Ablagestellung.

In den folgenden Figuren sind gleiche Bauteile mit gleichen Bezugszeichen versehen.

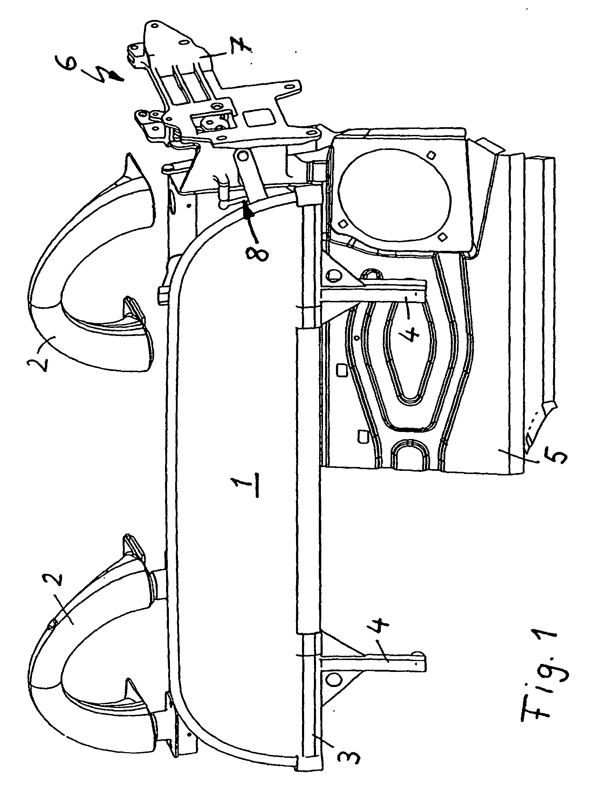

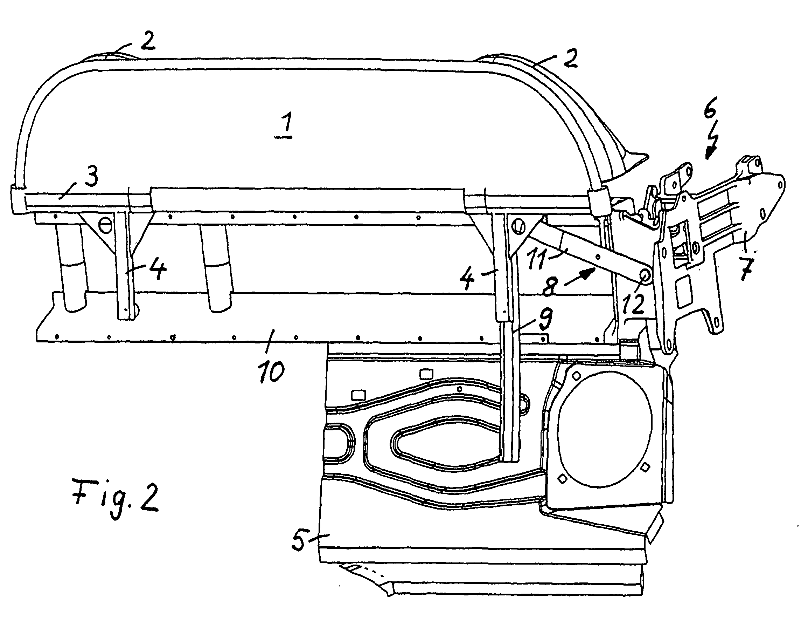

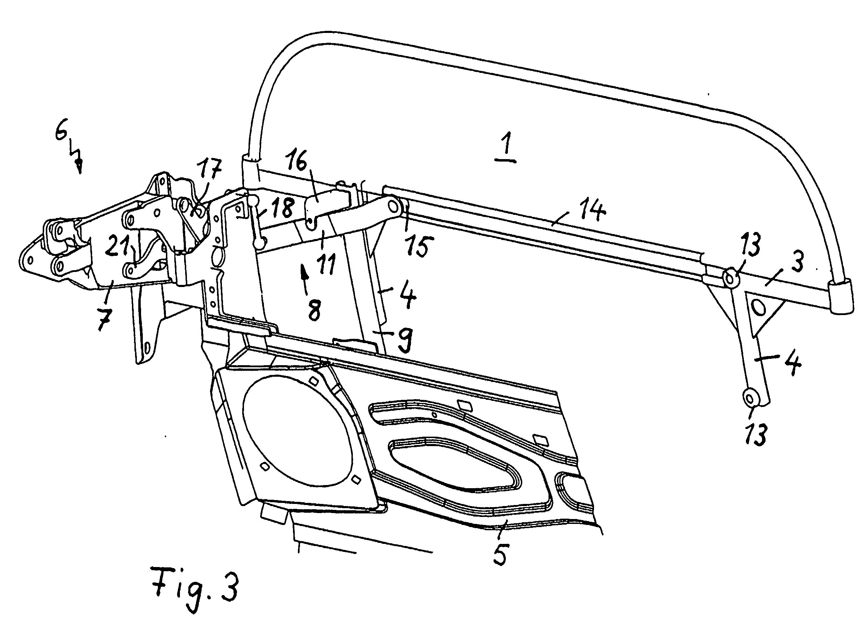

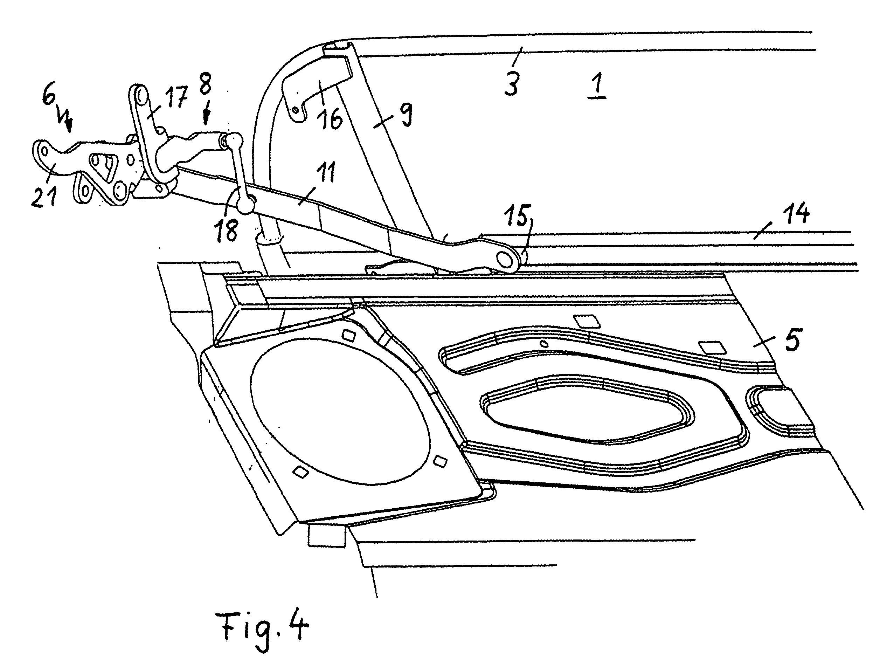

In der Darstellung nach Fig. 1 ist ein Windschott 1 gezeigt, das im Fahrzeug unmittelbar vor Überrollbügeln 2 angeordnet ist und zwischen der in den Fig. 1 und 4 dargestellten abgesenkten Position, in der die Oberkante des Windschotts bevorzugt die horizontale Karosserielinie nicht übersteigt, und der in den Fig. 2 und 3 dargestellten aufgestellten Position zu verstellen, in der das Windschott 1 über die horizontale Karosserielinie angehoben ist und vertikal etwa die Höhe der Überrollbügel 2 erreicht. Das Windschott 1 liegt in Fahrzeuglängsrichtung gesehen zwischen der Rückseite der Fahrzeugsitze und den Überrollbügeln 2 unmittelbar vor einer Karosserierückwand 5 der Fahrzeugkarosserie. Das Windschott 1 weist einen Rahmen 3 auf, in den ein Windschott-Bezugstoff eingespannt ist und an dessen Unterseite sich zwei Rahmenfüße 4 vertikal nach unten erstrekken. Die Rahmenfüße 4 sind als Formteile ausgeführt und bestehen insbesondere aus Kunststoff. Die Rahmenfüße 4 sind zweckmäßig einteilig mit dem Rahmen 3 ausgebildet.

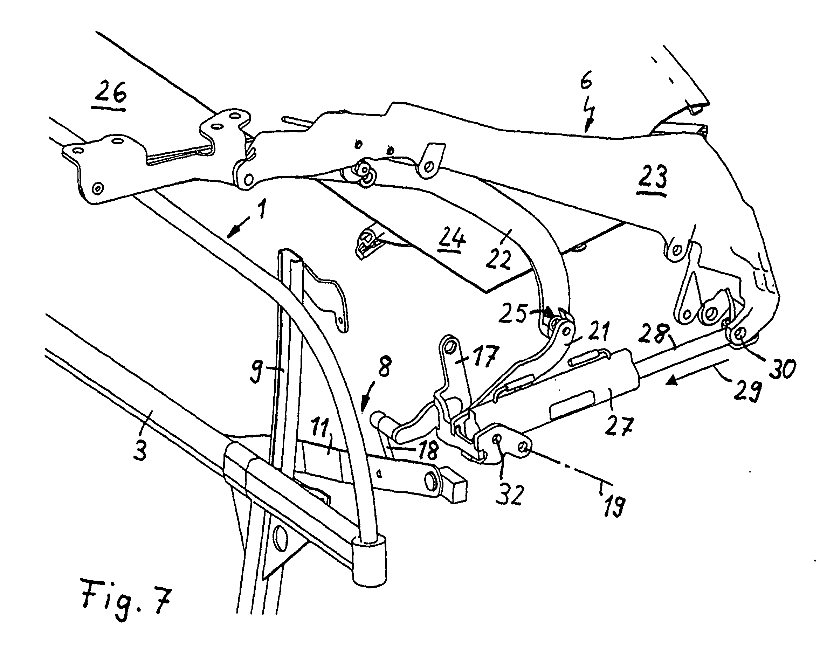

Im Seitenbereich des Fahrzeugs befindet sich ein Dachantrieb 6 zur Überführung des Fahrzeugdaches zwischen einer den Fahrzeuginnenraum verdeckenden Schließposition und einer den Fahrzeuginnenraum freigebenden Ablageposition. Dem Dachantrieb 6 ist ein Antriebselement zugeordnet, welches insbesondere als Hydraulikzylinder 27 (siehe Fig. 7 bis 9) ausgeführt ist, über den eine Dachkinematik zur Verstellung des Fahrzeugdaches zu betätigen ist. Die Dachkinematik ist über ein Hauptlager 7 mit der Fahrzeugkarosserie verbunden.

Weiterhin ist eine Windschott-Verstelleinrichtung 8 vorgesehen, über die das Windschott zwischen seiner abgesenkten und seiner aufgestellten Position zu verstellen ist. Die Windschott-Verstelleinrichtung 8 umfasst eine Mehrzahl eine Verstellkinematik bildender Hebel und Lenker, die in bestimmten Phasen bei der Öffnungs- bzw. Schließbewegung des Fahrzeugdaches zum Aufstellen bzw. Absenken des Windschotts 1 vom Dachantrieb 6 betätigt werden. Um eine zeitlich hintereinander ablaufende Bewegung des Fahrzeugdaches und des Windschotts zu ermöglichen, ist vorgesehen, dass die Windschott-Verstelleinrichtung 8 an den Dachantrieb, insbesondere an den Hydraulikzylinder des Dachantriebs, ankoppelbar bzw. entkoppelbar ist. Bevorzugt werden die Dachkinematik und die Windschott-Verstelleinrichtung 8 alternativ von dem Antriebselement des Dachantriebs, insbesondere des Hydraulikzylinders, beaufschlagt, so dass das Antriebselement entweder zur Verstellung des Fahrzeugdaches oder zur Verstellung des Windschotts herangezogen wird. In einer zweckmäßigen Ausführung wird bei der Überführung des Fahrzeugdaches von Schließstellung in Ablagestellung die Windschott-Verstelleinrichtung zunächst vom Antriebselement des Dachantriebes entkoppelt und das Fahrzeugdach unter der Einwirkung des Antriebselements vollständig in die den Fahrzeuginnenraum öffnende Ablagestellung überführt. Nach dem Ablegen des Fahrzeugdaches wird die Dachkinematik vom Antriebselement abgekoppelt und die Windschott-Verstelleinrichtung 8 an das Antriebselement angekoppelt, das nunmehr aus seiner abgesenkten Position in seine aufgestellte Position überführt wird. Im Falle eines Hydraulikzylinders als Antriebselement werden bei der Überführung von Schließ- in Ablageposition bevorzugt etwa 80% des Zylinderhubes als erster Teilhub zunächst ausschließlich für die Bewegung des Fahrzeugdaches verwendet und anschließend die verbleibenden 20% als zweiter Teilhub ausschließlich für die Bewegung des Windschotts 1 genutzt.

Bei der Überführung des Fahrzeugdaches von Ablage- in Schließposition läuft der gesamte Vorgang entsprechend in umgekehrter Richtung ab.

Wie Fig. 2, in der das Windschott 1 in aufgestellter Position gezeigt ist, zu entnehmen, ist das Windschott 1 translatorisch vertikal verschieblich in Führungsschienen 9 geführt, welche an einem karosserieseitigen Querträger 10 befestigt sind. Die Bewegung des Windschotts 1 wird von einem der Windschott-Verstelleinrichtung 8 zugeordneten Antriebslenker 11, der drehbeweglich über ein Gelenk 12 am karosseriefesten Hauptlager 7 der Dachkinematik des Dachantriebes 6 gelagert ist, auf das Windschott 1 übertragen. Die Schwenkbewegung des Antriebslenkers 11 um die Drehachse des Gelenks 12 am Hauptlager 7 wird über die Führung der Rahmenfüße 4 in den Führungsschienen 9 in eine vertikale, translatorische Auf- und Abbewegung des Windschotts 1 umgesetzt.

Wie Fig. 3 zu entnehmen, sind am Rahmenfuß 4 zwei vertikal beabstandete Führungsrollen 13 angeordnet, die in Zusammenbaulage eine gleitende bzw. abrollende Bewegung des Windschotts 1 in den karosseriefest angeordneten Führungsschienen 9 ermöglichen, welche über Befestigungsbleche 16 mit der Fahrzeugkarosserie verbunden sind.

Fig. 3 ist darüber hinaus zu entnehmen, dass im unteren Bereich auf der Rückseite des Windschotts 1 am Rahmen 3 eine horizontal verlaufende Gleitschiene 14 angeordnet ist, in der eine Gleitrolle 15 bzw. ein Gleitstein des Antriebslenkers 11 gleitend geführt ist. Dadurch wird bei einer Schwenkbewegung des Antriebslenkers 11 eine im Wesentlichen spannungsfreie vertikale Auf- und Abbewegung des Windschotts 1 in den Führungsschienen 9 ermöglicht.

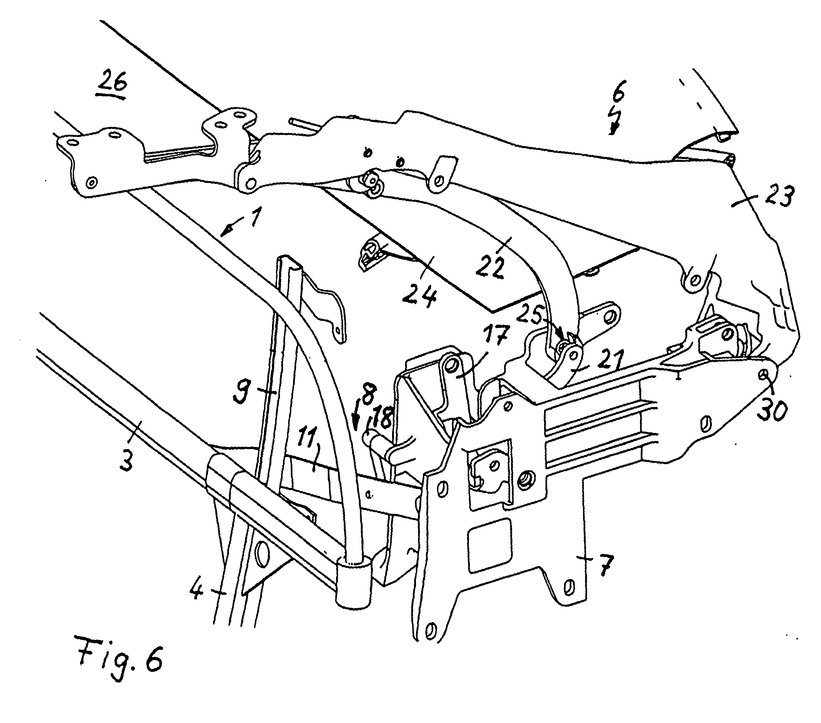

Wie Fig. 3 weiter zu entnehmen, ist der Antriebslenker 11 über einen Kugellenker 18 und einen Drehlenker 17 mit dem Dachantrieb 6 verbunden. Der freie Arm des Drehlenkers 17 wird zur Verstellung einer in den Fig. 6 bis 9 dargestellten Hutablage 24 herangezogen. Der Drehlenker 17 weist einen weiteren Arm 21 auf, der mit einem Hauptlenker der Dachkinematik verbunden ist.

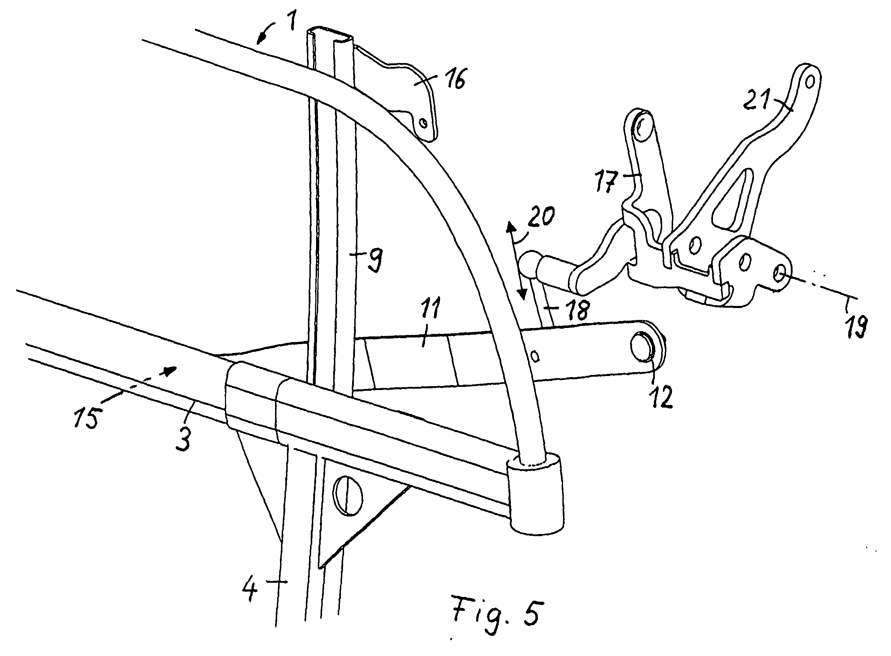

Den vergrößerten Darstellungen der Fig. 4 und 5 kann entnommen werden, dass der Kugellenker 18 beidendseitig gelenkig mit dem Antriebslenker 11 bzw. einem seitlich auskragenden Arm des Drehlenkers 17 verbunden ist. Der Drehlenker 17 ist um eine hauptlagerseitige Drehachse 19 drehbar gelagert (Fig. 5). Der radial zur Drehachse 19 ausragende Arm des Drehlenkers 17 wird zur Verstellung des Windschotts zwischen abgesenkter und aufgestellter Position vorteilhaft um einen Winkelbetrag von etwa 40° bis 45° verdreht. Die Drehbewegung des Drehlenkers 17 wird hierbei, wie in Fig. 5 mit dem Bewegungspfeil 20 dargestellt, über den Kugellenker 18 auf den Antriebslenker 11 übertragen, wobei der Angriffspunkt des Kugellenkers 18 im zwischenliegenden Bereich zwischen dem Gelenk 12 des Antriebslenkers 11 und der Gleitrolle 15 am Antriebslenker 11 liegt. Das für die Aufund Abbewegung des Windschotts 1 erforderliche Drehmoment bemisst sich aus dem Abstand zwischen Gelenk 12 am Antriebslenker 11 und dem Angriffspunkt des Kugellenkers 18 am Antriebslenker 11 sowie der über den Kugellenker 18 auf den Antriebslenker 11 übertragenen Kraft. Die gelenkige Anbindung des Kugellenkers 18 sowohl am Drehlenker 17 als auch am Antriebslenker 11 ermöglicht eine verspannungsfreie Umsetzung der Drehbewegung des Drehlenkers 17 auf die Drehbewegung des Antriebslenkers 11 trotz sich kreuzender Drehachsen von Drehlenker 17 und Antriebslenker 11.

Wie in Fig. 5 dargestellt, weisen die Führungsschienen 9 eine geringe Krümmung bezogen auf eine Fahrzeuglängsebene auf. Diese Krümmung ermöglicht eine raumsparende Anordnung und Versenkung des Windschotts unmittelbar auf der Rückseite der Fahrzeugsitze. Die Krümmung ist zweckmäßig als konstanter Radius ausgeführt.

In den Fig. 6 bis 9 ist neben der Windschott-Verstelleinrichtung 8 auch die Dachkinematik zur Verstellung des Fahrzeugdaches zwischen Schließ- und Ablagestellung gezeigt. Wie Fig. 6 zu entnehmen, ist der mit dem Drehlenker 17 drehfest verbundene und radial zur Drehachse des Drehlenkers 17 ausragende Arm 21 in einer maulförmigen Aufnahme 25 eines Hauptlenkers 22 der Dachkinematik aufgenommen. Der Hauptlenker 22 ist auf der dem Arm 21 abgewandten Seite drehbar mit einem Scharnierarm 23 verbunden, an dessen einem Ende das Fahrzeugdach 26 gehalten ist und dessen anderes Ende über ein Gelenk 30 drehbar mit dem Antriebselement des Dachantriebs verbunden ist, welches gemäß den Fig. 7 bis 9 als Hydraulikzylinder 27 mit einem Hubkolben 28 ausgeführt ist.

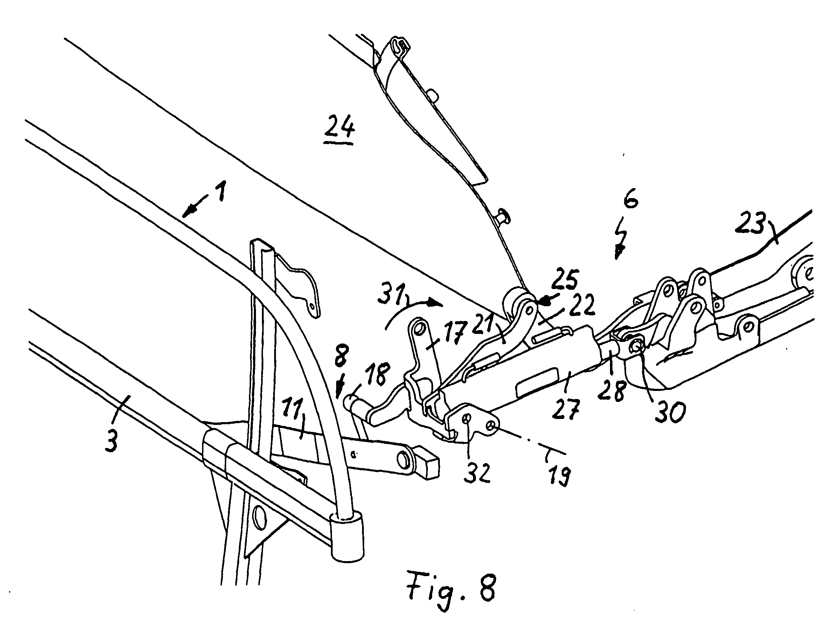

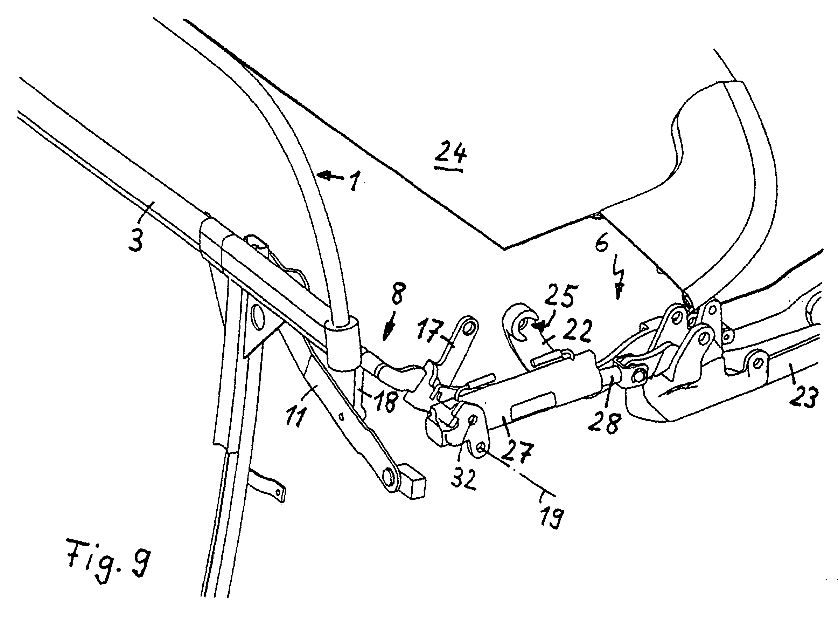

In den Fig. 6 und 7 ist das Fahrzeugdach 26 in Schließposition, in den Fig. 8 und 9 in Ablageposition dargestellt. In Schließposition des Fahrzeugdaches 26 ist der Hubkolben 28 des antreibenden Hydraulikzylinders 27 vollständig ausgefahren. Zur Überführung in Ablageposition wird der Hubkolben 28 in Pfeilrichtung 29 zu 80% in den Hydraulikzylinder 27 eingefahren. Der Hydraulikzylinder 27 ist bei der Überführung von Schließ- in Ablageposition karosseriefest gehalten. Durch die Einfahrbewegung des Hubkolbens 28 in den Hydraulikzylinder 27 wird der am Hubkolben 28 über das Gelenk 30 schwenkbar verbundene Scharnierarm 23 im Bereich des Gelenks 30 in Pfeilrichtung 29 bewegt, siehe Fig. 7. Zugleich erfährt der Scharnierarm 23 über den Hauptlenker 22, welcher drehbar in der Aufnahme 25 des Arms 21 gelagert ist, eine kinematische Führung, um undefinierte Bewegungszustände des Fahrzeugdaches 26 zu vermeiden, und führt insgesamt beim Öffnen des Daches eine Schwenkbewegung aus.

In Fig. 8 befindet sich das Fahrzeugdach in seiner Ablageposition. Der Hubkolben 28 ist zu etwa 80% in den Hydraulikzylinder 27 eingefahren. Auf Grund der Schwenkbewegung des Hauptlenkers 22 um seine maulförmige Aufnahme 25 am Hauptlenker 22 wird der drehfest mit dem Drehlenker 17 gekoppelte Arm 21 nach unten in Schwerkraftrichtung aus der Aufnahme 25 freigegeben, wodurch unabhängig vom Hauptlenker 22 eine Schwenkbewegung des Drehlenkers 17 einschließlich seines Armes 21 um die karosseriefeste Drehachse 19 in Pfeilrichtung 31 in die in Fig. 9 dargestellte Lage ermöglicht wird. Da der Hubkolben 28 im Bereich des Gelenks 30 zum Scharnierarm 23 auf Grund der Ablage der Dachkinematik und des Fahrzeugdaches in der Ablageposition unbeweglich festliegt und zugleich die gegenüberliegende Stirnseite des Hydraulikzylinders 27 schwenkbeweglich über ein Gelenk 32 mit dem Drehlenker 17 gekoppelt ist, wird bei einer weiteren Einfahrbewegung des Hubkolbens 28 nunmehr der Hydraulikzylinder 27 seine bis dahin karosseriefeste Position verlassen und sich mit dem verbleibenden Resthub, welcher vorteilhaft etwa 20% des Gesamthubes beträgt, sich in Richtung Gelenk 30 und Scharnierarm 23 bewegen. Bei dieser Bewegung, bei der der Hubkolben 28 in Bezug auf die Karosserie unbeweglich festliegt, verschwenkt der Hydraulikzylinder 27 um sein Gelenk 32 und übt auf Grund des Abstandes des Gelenks 32 zur Drehachse 19 ein Drehmoment auf den Drehlenker 17 auf, der daraufhin in Pfeilrichtung 31 (Fig. 8) verschwenkt und die in Fig. 9 dargestellte Position einnimmt, in der das Windschott 1 durch die Übertragung der Drehung des Drehlenkers 17 über den Kugellenker 18 und den Antriebslenker 11 aus seiner abgesenkten Position in die aufgestellte Position überführt ist.

Der Übergang von der Verstellbewegung des Fahrzeugdaches, ausgelöst durch die erste Teilhubbewegung des Hubkolbens 28 in den Hydraulikzylinder 27, auf die Verstellbewegung des Windschotts 1, ausgelöst durch die Resthubbewegung, wird ermöglicht durch die Freigabe des Arms 21 des Drehlenkers 17 aus der Aufnahme 25 des Hauptlenkers 22 in Verbindung mit dem ortsfesten Ablegen des Scharnierarmes 23 in der Ablageposition des Fahrzeugdaches. Während der ersten Teilhubbewegung wird der Hubkolben 28 relativ zu dem bis dahin ortsfest gehaltenen Hydraulikzylinder 27 bewegt, wohingegen während der Resthubbewegung der Hubkolben 28 ortsfest gehalten wird und der Hydraulikzylinder 27 relativ zum Hubkolben bewegt wird. Hierdurch ist es möglich, mit nur einem hydraulischen Stellelement in einer abgestimmten Bewegung zunächst das Fahrzeugdach zu öffnen und anschließend das Windschott hochzufahren bzw. - in umgekehrter Richtung - beim Schließen des Fahrzeugdaches zunächst das Windschott abzusenken und anschließend das Fahrzeugdach aus seiner Ablageposition in die Schließposition zu verbringen.

Zweckmäßig ist die Bewegung des Windschotts 1 mit der Bewegung der Hutablage 24 kinematisch gekoppelt. Die Hutablage 24 kann über eine nicht dargestellte kinematische Einrichtung an den Drehlenker 17 angebunden sein.

## Patentansprüche

1. Windschott für ein Cabriolet-Fahrzeug mit einem verstellbaren Fahrzeugdach, wobei das Windschott (1) auf vertikal verlaufenden Führungsschienen (9) zwischen einer abgesenkten Position und einer aufgestellten Position verschiebbar und eine das Windschott (1) zwischen abgesenkter und aufgestellter Position selbsttätig in den Führungsschienen (9) verschiebbare Windschott-Verstelleinrichtung (8) vorgesehen ist,
**dadurch gekennzeichnet,**
**dass** die Windschott-Verstelleinrichtung (8) von einem das Fahrzeugdach (26) zwischen einer Schließstellung und einer Ablagestellung verstellenden Dachantrieb (6) betätigbar ist, wobei die Windschott-Verstelleinrichtung (8) vom Dachantrieb (6) entkoppelbar ist, derart, dass das Windschott (1) nur in bestimmten Bewegungsphasen des Fahrzeugdaches aufzustellen bzw. abzusenken ist und/oder die Windschottbewegung gegenüber der Dachbewegung beschleunigt oder verzögert ist.

2. Windschott nach Anspruch 1,
**dadurch gekennzeichnet,**
**dass** bei der Überführung des Fahrzeugdaches (26) von Schließstellung in Ablagestellung die Windschott-Verstelleinrichtung (8) vom Dachantrieb (6) entkoppelt ist und dass nach dem Ablegen des Fahrzeugdaches (26) die Windschott-Verstelleinrichtung (8) an den Dachantrieb (6) angekoppelt und von der abgesenkten Position in die aufgestellte Position verstellt wird.

3. Windschott nach Anspruch 1 oder 2,
**dadurch gekennzeichnet,**
**dass** der Dachantrieb (6) einen Hydraulikzylinder umfasst, der im Bereich eines ersten Teilhubes ausschließlich das Fahrzeugdach (26) und im Bereich eines zweiten Teilhubes ausschließlich das Windschott (1) beaufschlagt.

4. Windschott nach einem der Ansprüche 1 bis 3,
**dadurch gekennzeichnet,**
**dass** die Windschott-Verstelleinrichtung (8) einen schwenkbar gelagerten, das Windschott (1) in den Führungsschienen (9) verfahrenden Antriebslenker (11) umfasst, der vom Dachantrieb (6) betätigbar ist.

5. Windschott nach Anspruch 4,
**dadurch gekennzeichnet,**
**dass** der Antriebslenker (11) an der Fahrzeugkarosserie schwenkbar gelagert ist und dass am Windschott (1) eine Gleitschiene (14) vorgesehen ist, in der der Antriebslenker (11) geführt ist.

6. Windschott nach Anspruch 5,
**dadurch gekennzeichnet,**
**dass** die Gleitschiene (14) horizontal am Windschott (1) verläuft.

7. Windschott nach einem der Ansprüche 1 bis 6,
**dadurch gekennzeichnet,**
**dass** die Windschott-Verstelleinrichtung (8) von einem Drehlenker (17) vom Dachantrieb (6) beaufschlagt ist und der Drehlenker (17) gelenkig mit der Windschott-Verstelleinrichtung (8) verbunden ist.

8. Windschott nach Anspruch 7,
**dadurch gekennzeichnet,**
**dass** der Drehlenker (17) eine Drehbewegung von maximal 45° zur Anhebung und Absenkung des Windschotts (1) ausführt.

9. Windschott nach einem der Ansprüche 1 bis 8,
**dadurch gekennzeichnet,**
**dass** das Windschott (1) zwischen den Fahrzeugsitzen und einem Überrollbügel (2) angeordnet ist.

10. Windschott nach einem der Ansprüche 1 bis 9,
**dadurch gekennzeichnet,**
**dass** die Führungsschienen (9) mit einem konstanten Radius gebogen sind.

## Claims

1. Wind deflector for a cabriolet vehicle having an adjustable vehicle roof, the wind deflector (1) being displaceable between a lowered position and an erected position on guide rails (9) which run vertically, and a wind-deflector adjusting device (8) which can automatically displace the wind deflector (1) between the lowered position and erected position in the guide rails (9) being provided, **characterized in that** the wind-deflector adjusting device (8) can be actuated by a roof drive (6) which adjusts the vehicle roof (26) between a closed position and a storage position, in which case the wind-deflector adjusting device (8) can be decoupled from the roof drive (6) in such a manner that the wind deflector (1) can be erected or lowered only in certain movement phases of the vehicle roof and/or the wind-deflector movement is accelerated or retarded relative to the roof movement.

2. Wind deflector according to Claim 1, **characterized in that**, when the vehicle roof (26) is transferred from the closed position into the storage position, the wind-deflector adjusting device (8) is decoupled from the roof drive (6), and, after the vehicle roof (26) has been put away, the wind-deflector adjusting device (8) is coupled to the roof drive (6) and is adjusted from the lowered position into the erected position.

3. Wind deflector according to Claim 1 or 2, **characterized in that** the roof drive (6) comprises a hydraulic cylinder which, in the region of a first partial stroke, acts exclusively on the vehicle roof (26) and, in the region of a second partial stroke, acts exclusively on the wind deflector (1).

4. Wind deflector according to one of Claims 1 to 3, **characterized in that** the wind-deflector adjusting device (8) comprises a driving link (11) which is mounted pivotably, moves the wind deflector (1) in the guide rails (9) and can be actuated by the roof drive (6).

5. Wind deflector according to Claim 4, **characterized in that** the driving link (11) is mounted pivotably on the vehicle body, and **in that** a sliding rail (14) in which the driving link (11) is guided is provided on the wind deflector (1).

6. Wind deflector according to Claim 5, **characterized in that** the sliding rail (14) runs horizontally on the wind deflector (1).

7. Wind deflector according to one of Claims 1 to 6, **characterized in that** the wind-deflector adjusting device (8) is acted upon by the roof drive (6) by means of a rotary link (17) and the rotary link (17) is connected to the wind-deflector adjusting device (8) in an articulated manner.

8. Wind deflector according to Claim 7, **characterized in that** the rotary link (17) executes a rotational movement of at maximum 45° with respect to the raising and lowering of the wind deflector (1).

9. Wind deflector according to one of Claims 1 to 8, **characterized in that** the wind deflector (1) is arranged between the vehicle seats and a roll bar (2).

10. Wind deflector according to one of Claims 1 to 9, **characterized in that** the guide rails (9) are bent at a constant radius.

## Revendications

1. Déflecteur d'air pour un véhicule convertible comprenant un toit de véhicule réglable, le déflecteur d'air (1) pouvant être coulissé sur des rails de guidage (9) s'étendant verticalement entre une position abaissée et une position redressée et un dispositif de réglage (8) du déflecteur d'air, pouvant déplacer le déflecteur d'air (1) automatiquement dans les rails de guidage (9) entre la position abaissée et la position redressée étant prévu,
**caractérisé en ce que**
le dispositif de réglage (8) du déflecteur d'air peut être actionné par une commande de toit (6) déplaçant le toit du véhicule (26) entre une position de fermeture et une position de rangement, le dispositif de réglage (8) du déflecteur d'air pouvant être désaccouplé de la commande de toit (6) de telle sorte que le déflecteur d'air (1) ne doive être redressé ou abaissé que dans des phases de déplacement déterminées du toit du véhicule et/ou que le déplacement du déflecteur d'air soit accéléré ou ralenti par rapport au déplacement du toit.

2. Déflecteur d'air selon la revendication 1,
**caractérisé en ce que**
lors du passage du toit du véhicule (26) de la position de fermeture dans la position de rangement, le dispositif de réglage (8) du déflecteur d'air est désaccouplé de la commande du toit (6) et **en ce qu'**après le rangement du toit du véhicule (26), le dispositif de réglage (8) du déflecteur d'air est accouplé à la commande du toit (6) et est déplacé de la position abaissée dans la position redressée.

3. Déflecteur d'air selon la revendication 1 ou 2,
**caractérisé en ce que**
la commande du toit (6) comprend un vérin hydraulique qui sollicite exclusivement le toit du véhicule (26) dans la région d'une première course partielle et qui sollicite exclusivement le déflecteur d'air (1) dans la région d'une deuxième course partielle.

4. Déflecteur d'air selon l'une quelconque des revendications 1 à 3,
**caractérisé en ce que**
le dispositif de réglage (8) du déflecteur d'air comprend un bras d'entraînement (11) monté de manière à pouvoir pivoter, déplaçant le déflecteur d'air (1) dans les rails de guidage (9), qui peut être actionné par la commande du toit (6).

5. Déflecteur d'air selon la revendication 4,
**caractérisé en ce que**
le bras d'entraînement (11) est monté de manière à pouvoir pivoter sur la carrosserie du véhicule et **en ce qu'**un rail de glissement (14) est prévu sur le déflecteur d'air (1), dans lequel le bras d'entraînement (11) est guidé.

6. Déflecteur d'air selon la revendication 5,
**caractérisé en ce que**
le rail de glissement (14) s'étend horizontalement sur le déflecteur d'air (1).

7. Déflecteur d'air selon l'une quelconque des revendications 1 à 6,
**caractérisé en ce que**
le dispositif de réglage (8) du déflecteur d'air est sollicité par un bras rotatif (17) de la commande du toit (6) et le bras rotatif (17) est connecté de manière articulée au dispositif de réglage (8) du déflecteur d'air.

8. Déflecteur d'air selon la revendication 7,
**caractérisé en ce que**
le bras rotatif (17) effectue un mouvement de rotation de 45° au maximum pour soulever et abaisser le déflecteur d'air (1).

9. Déflecteur d'air selon l'une quelconque des revendications 1 à 8,
**caractérisé en ce que**
le déflecteur d'air (1) est disposé entre les sièges du véhicule et un arceau de sécurité (2).

10. Déflecteur d'air selon l'une quelconque des revendications 1 à 9,
**caractérisé en ce que**
les rails de guidage (9) sont cintrés avec un rayon constant.
